# EUROPEAN PATENT SPECIFICATION

(11) **EP 0 448 864 B1**
(45) Date of publication and mention of the grant of the patent: **20.12.1995**
(21) Application number: 90311879.2
(22) Date of filing: 30.10.1990
(51) Int. Cl.: H02H 9/00, B60R 11/02

(54) **Protection circuit for detachable operating unit used in audio device**
Schutzschaltung für eine abnehmbare Steuereinheit in einem Schallgerät
Circuit de protection pour une unité de commande amovible utilisée dans un dispositif audio

(30) Priority: 30.03.1990 JP 81008/90
(43) Date of publication of application: 02.10.1991
(73) Proprietor: PIONEER ELECTRONIC CORPORATION, Meguro-ku Tokyo 153 (JP)
(72) Inventor: Kato, Seiji, c/o Pioneer Electronic Corporation, Oaza Yamada, Kawagoe-shi, Saitama (JP); Kiyoura, Kazuhiro, c/o Pioneer Electronic Corp., Oaza Yamada, Kawagoe-shi, Saitama (JP)
(74) Representative: Brunner, Michael John

(56) References cited:
- EP-A- 0 253 947
- EDN ELECTRICAL DESIGN NEWS, vol. 29, no. 2, January 1984, NEWTON, MASSACHUSETTS, US, pp. 137-152 ; Paul Monnone : 'Careful design methods prevent CMOS latch-up'

## Description

### BACKGROUND OF THE INVENTION

The present invention relates to a protection circuit for a detachable operating unit used in an audio device. More specifically, it relates to a protection circuit for a detachable operating unit such that when the detachable operating unit is connected to a main audio device, the main audio device applies two different voltages to the detachable operating unit by two power supplies through two contact points, respectively.

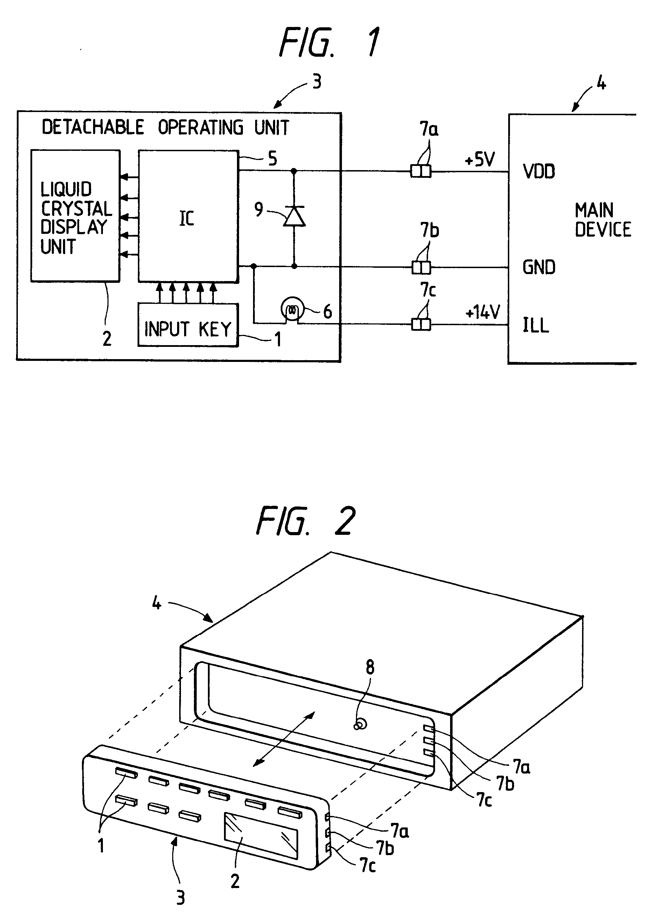

In a known automotive audio device for an automobile such as a car stereo, a car compact disk player and a car radio, a detachable operating unit 3 having an input key unit 1 and a liquid crystal display unit 2 is detachable from a main audio device 4 as shown in Fig. 2. When the car is stopped or parked, the detachable operating unit 3 may be separated from the main audio device 4 to prevent the audio device from being stolen.

The detachable operating unit 3 comprises an IC circuit 5 controlling the input key unit 1, the liquid crystal display panel unit 3, and an illumination lamp 6 for illuminating a surface of the liquid crystal display unit 2.

An operating voltage VDD of the IC circuit is, for example, +5V at a relatively low level. On the other hand, an operating voltage ILL of the illumination lamp 6 is, for example, +14V at a relatively high level. Therefore, both operating voltages could not be supplied from a single power supply unit. As a result, the operating voltages are supplied by two power supply units through power supply terminals 7a and 7c, respectively. A contact terminal 7b is used for the ground (GND).

However, in the case where the detachable operating unit 3, which has a structure such that the operating voltages VDD and ILL separately applied to the detachable operating unit 3, is engaged with or disengaged from the main audio device, if the timing of connection of the ground terminal GND to the main audio device is delayed from that of the power supply terminals 7a and 7c, a reverse voltage resulting from the difference between the operating voltages ILL and VDD (for example, 5V - 14V = -9V) is inadvertently applied to the IC circuit 5, which can damage or break down the latter.

Therefore, to overcome the above-described problems inherent in the conventional device having a detachable operating unit, it has been proposed that the engaging surface of the main audio device has an engaging/disengaging detecting switch 8 for detecting whether the detachable operating unit 3 is engaged or disengaged. As a result, when the detecting switch 8 detects that the operating detachable unit is engaged with the main audio device, the operating voltages VDD and ILL are supplied to the power supply terminals 7a and 7c, respectively. However, to prevent the IC circuit from being broken, the timing of supply of the operating voltages to the power supply terminals is controlled and the audio device is required to include a detecting switch, an ON/OFF switching unit of the power supply, a control circuit for controlling the ON/OFF switching unit of the power supply, and software for controlling the ON/OFF switching unit and control circuit, so that the number of mechanical and electronic parts and additional processes is increased, and the mounting space of the audio device is increased, resulting in an undesired enlargement of the device.

In view of the above problems inherent in the prior art, it is an object of the present invention to provide a simple protection circuit for a detachable unit in which, when the detachable unit is engaged with or disengaged from a main device, if the contact of a ground terminal to the main device is delayed from that of the power supply terminals thereof, an internal circuit such as an IC circuit may be protected from an accidental reverse voltage.

To accomplish the above and other objects, the present invention provides a detachable operating unit as specified in claim 1.

According to the present invention, when the timing of connecting the ground terminal to the main device is delayed from that of the power supply terminals, the reverse voltage which results from the difference between the voltages of the two power supply units is applied to the protective diode. As a result, the reverse voltage generated between the lower voltage power supply unit and the ground terminal is limited to the voltage drop caused by the voltage through the protective diode in the forward direction so as to prevent internal circuits, such as the IC circuit, connected to the power supply unit generating a voltage lower than that of the other power supply unit, from being broken by the reverse voltage.

In the accompanying drawings:
Fig. 1 is a block diagram showing the structure of the present invention;
Fig. 2 is a schematic illustration of a conventional apparatus having a detachable unit;
Fig. 3 is a block diagram showing the structure of a conventional apparatus; and
Fig. 4 is a block diagram describing the structure of the conventional apparatus, when the ground terminal is not connected to the main device.

### DETAILED DESCRIPTION OF THE PREFERRED EMBODIMENTS

The present invention will now be described in more detail with reference to the accompanying drawings.

One example of a detachable unit according to the present invention will now be described.

In a detachable operating unit 3, a protective diode 9 is connected between a power supply terminal 7a and a ground terminal 7b with a reverse polarity.

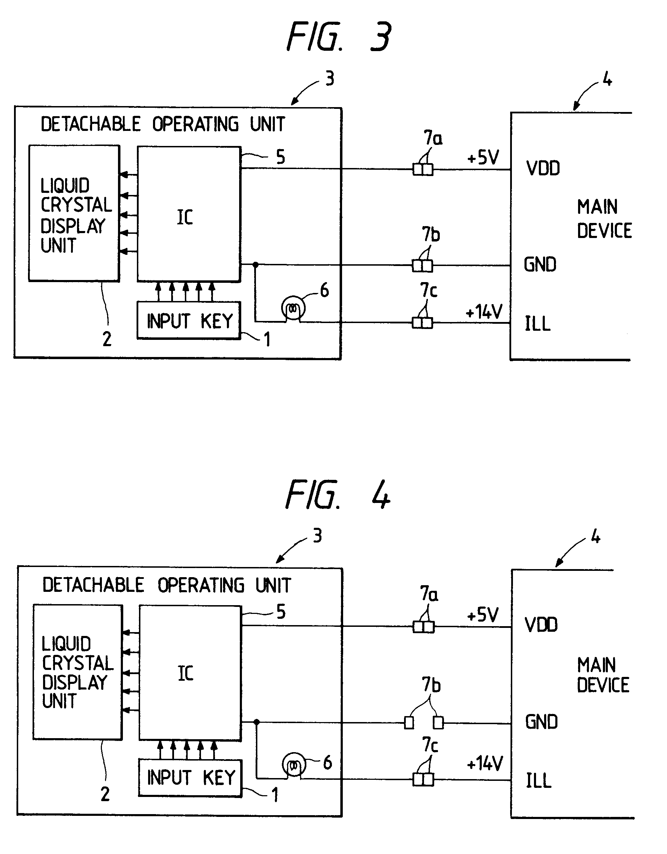

As shown in Fig 1, the detachable operating unit 3 according to the present invention is composed of substantially the same components as those shown in Figs. 3 and 4. Therefore, the duplicated description will be omitted.

In Fig. 1, assuming that the timing of connection of the ground terminal 7b is delayed from that of the power supply terminals 7a and 7c thereof as shown in Fig. 4, a reverse voltage which results from the difference between operating voltages ILL and VDD (for example 5V - 14V = -9V) would be applied to an IC circuit 5. However, the reverse voltage is applied to the protective diode 9 with the reverse polarity. The reverse voltage is generated between a power input terminal of the IC circuit and the ground terminal and is limited to the voltage drop (about 0.6 V) caused by applying the voltage through the protective diode 9 with forward polarity. Therefore, only a limited reverse voltage is applied to the IC circuit 5 so as to avoid the breakage of the IC circuit 5.

In this embodiment of the present invention, the protective diode in disposed around the IC circuit 5. the protective diode could be formed on a tip of IC circuit 5 in a manufacturing process.

According to the present invention, the protective diode is connected with reverse polarity between the ground terminal and the power supply terminal which generates a voltage lower than that of the other power supply terminal thereof so as to absorb a reverse voltage by the protective diode, and to avoid the breakage of the internal circuit connected to the power supply unit which generates a voltage lower than that of the other power supply thereof. It is therefore unnecessary to employ an engaging/disengaging detecting device, the manufacturing cost is decreased, and it is possible to decrease the size of the audio device.

## Claims

1. A detachable operating unit (3) for connection with a main unit (4) comprising at least two power supply units for applying operating voltages to the detachable operating unit, the power supply units respectively generating two different voltages with respect to a ground of the main unit;
the detachable operating unit (3) comprising at least two power supply terminals (7a,7c) for engaging the main unit and for respectively receiving said two different voltages from said power supply units, and a ground terminal (7b) for engaging said ground of the main unit;
the detachable operating unit being characterised in that it comprises:
a diode (9) having a first end connected to the one (7a) of the power supply terminals (7a,7c) that receives the lower of the two different voltages and a second end connected to said ground terminal (7b), the diode forming a non-conductive circuit when the ground terminal engages the ground of the main unit (4) and forming a conductive circuit when the ground terminal is not engaged with the ground of the main unit while said at least two power supply terminals are engaged with the main unit and receive said two different voltages from the power supply units, to limit thereby a reverse voltage that appears in this case between said one (7a) of the power supply terminals that receives the lower voltage and the ground terminal (7b).

## Patentansprüche

1. Abnehmbare Bedienungseinheit (3) zur Verbindung mit einer Haupteinheit (4), die mindestens zwei Versorgungseinheiten zum Zuführen von Betriebsspannungen zu der abnehmbaren Bedienungseinheit aufweist, wobei die Energieversorgungseinheiten jeweils zwei unterschiedliche Spannungen hinsichtlich einer Masse der Haupteinheit erzeugen;
wobei die abnehmbare Bedienungseinheit (3) mindestens zwei Energieversorgungsanschlüsse (7a,7c) für einen Eingriff mit der Haupteinheit und zur jeweiligen Aufnahme der zwei unterschiedlichen Spannungen von den Energieversorgungseinheiten und einen Masseanschluß (7b) für einen Eingriff mit der Masse der Haupteinheit aufweist;
wobei die abnehmbare Bedienungseinheit dadurch gekennzeichnet ist, daß sie aufweist:
eine Diode (9), die ein erstes Ende, das mit einem (7a) der Energieversorgungsanschlüsse (7a,7c) verbunden ist, der die niedrigere der zwei unterschiedlichen Spannungen aufnimmt, und ein zweites Ende mit dem Masseanschluß (7b) verbunden besitzt, wobei die Diode einen nicht leitenden Schaltkreis bildet, wenn der Masseanschluß in die Masse der Haupteinheit (4) eingreift und einen leitenden Schaltkreis bildet, wenn der Masseanschluß nicht mit der Masse der Haupteinheit in Eingriff gebracht ist, während mindestens zwei Energieversorgungsanschlüsse mit der Haupteinheit in Eingriff gebracht sind, und die zwei unterschiedliche Spannungen von den Energieversorgungseinheiten aufnimmt, um dadurch eine Rückwärtsspannung zu begrenzen, die in diesem Fall zwischen dem einen (7a) der Energieversorgungsanschlüsse, der die niedrigere Spannung aufnimmt, und dem Masseanschluß (7b) auftritt.

## Revendications

1. Unité fonctionnelle détachable (3) destinée à être connectée à une unité principale (4) comprenant au moins deux unités d'alimentation électrique servant à appliquer des tensions de fonctionnement à l'unité fonctionnelle détachable, les unités d'alimentation électrique produisant respectivement deux tensions différentes par rapport à la masse électrique de l'unité principale;
l'unité fonctionnelle détachable (3) comprenant au moins deux bornes d'alimentation électrique (7a, 7c) destinées à venir en contact avec l'unité principale et à recevoir respectivement lesdites deux tensions différentes de la part desdites unités d'alimentation électrique, ainsi qu'une borne de masse électrique (7b) destinée à venir en contact avec ladite masse de l'unité principale;
l'unité fonctionnelle détachable étant caractérisée en ce qu'elle comprend:
une diode (9) qui possède une première extrémité connectée à celle (7a) des bornes d'alimentation électrique (7a, 7c) qui reçoit la plus basse des deux tensions différentes et une deuxième extrémité connectée à ladite borne de masse (7b), la diode formant un circuit non conducteur lorsque la borne de masse est en contact avec la masse de l'unité principale (4) et formant un circuit conducteur lorsque la borne de masse n'est pas en contact avec la masse de l'unité principale tandis que lesdites deux ou plus de deux bornes d'alimentation électrique sont en contact avec l'unité principale et reçoivent lesdites deux tensions différentes de la part des unités d'alimentation électrique, de manière à ainsi limiter la tension inverse qui apparaît dans ce cas entre celle (7a) des bornes d'alimentation électrique qui reçoit la tension la plus basse et la borne de masse (7b).
